# EUROPÄISCHE PATENTSCHRIFT

(11) **EP 3 557 286 B1**
(45) Veröffentlichungstag und Bekanntmachung des Hinweises auf die Patenterteilung: **15.04.2020**
(21) Anmeldenummer: 19164520.9
(22) Anmeldetag: 22.03.2019
(51) Int. Cl.: G01S 17/10, G01S 7/487, G01S 7/486

(54) **OPTOELEKTRONISCHER SENSOR UND VERFAHREN ZUR ERFASSUNG UND ABSTANDSBESTIMMUNG EINES OBJEKTS**
OPTOELECTRONIC SENSOR AND METHOD FOR DETECTING AND DETERMINING THE DISTANCE FROM OBJECTS
CAPTEUR OPTOÉLECTRONIQUE ET PROCÉDÉ DE DÉTECTION ET DE DÉTERMINATION DE DISTANCE D'UN OBJET

(30) Priorität: 17.04.2018 DE 102018109014
(43) Veröffentlichungstag der Anmeldung: 23.10.2019
(73) Patentinhaber: SICK AG, 79183 Waldkirch (DE)
(72) Erfinder: Gimpel, Hartmut, 79194 Gundelfingen (DE); Marra, Martin, 79280 Au (DE)

(56) Entgegenhaltungen:
- EP-A1- 1 522 870
- EP-A1- 1 843 171
- EP-A1- 1 882 959
- EP-A1- 2 942 644
- EP-A1- 2 942 645

## Beschreibung

Die Erfindung betrifft einen optoelektronischen Sensor und ein Verfahren zur Erfassung und Abstandsbestimmung eines Objekts in einem Überwachungsbereich nach dem Oberbegriff von Anspruch 1 beziehungsweise 12.

Bei optoelektronischen Sensoren nach dem Prinzip des Lichtlaufzeitverfahrens werden Lichtsignale ausgesandt, und die Zeit bis zum Empfang der an Objekten remittierten oder reflektierten Lichtsignale wird gemessen. Optoelektronische Entfernungsmessung kann beispielsweise in der Fahrzeugsicherheit, der Logistik- oder Fabrikautomatisierung oder der Sicherheitstechnik benötigt werden. Meist ist die gesuchte Ausgabegröße der gemessene Abstand. Alternativ kann ein Entfernungsmesser nach dem Lichtlaufzeitverfahren auch schaltend arbeiten, indem eine Entfernungsänderung eines in einem bestimmten Abstand erwarteten Reflektors oder eines reflektierenden oder remittierenden Objekts erkannt wird. Eine besondere Anwendung ist eine Reflexionslichtschranke mit Überwachung des Abstandes zu ihrem Reflektor.

Das Lichtlaufzeitverfahren ist auch das Prinzip, nach dem entfernungsmessende Laserscanner arbeiten, die periodisch eine Überwachungsebene oder sogar einen dreidimensionalen Raumbereich abtasten. Speziell in der Sicherheitstechnik werden sichere Laserscanner eingesetzt, die konfigurierbare Schutzfelder auf unzulässige Eingriffe überwachen. Sichere Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

Die Genauigkeit der Entfernungsmessung hängt entscheidend davon ab, wie gut der Empfangszeitpunkt bestimmt werden kann. Herkömmliche Pulsverfahren senden einen Einzelpuls und bestimmen die Lage des daraufhin empfangenen Echopulses. Dabei wird der Echopuls durch eine Komparatorschwelle von Störsignalen unterschieden.

Beispielsweise aus EP 1 972 961 A2 ist ein Laufzeitverfahren bekannt, das anstelle einer Einzelpulsauswertung eine Vielzahl von Einzelmessungen mit jeweils einem Sendepuls durchführt und die jeweiligen Empfangssignale in einem Histogramm aufaddiert. Durch diese statistische Auswertung addiert sich das Nutzsignal, während zufällige Rauscheinflüsse ausgemittelt werden, so dass das Signal-Rausch-Verhältnis deutlich verbessert wird. Eine Besonderheit des Verfahrens ist, dass verschiedene Maßnahmen getroffen werden, um diese komplexere Auswertung auf besonders kostengünstiger Hardware durchführen zu können. Dazu zählt, dass anstelle eines aufwändigen schnellen A/D-Wandlers lediglich ein Null-Schwellen-Komparator eingesetzt wird, der das Einzelsignal mit nur 1-Bit-Auflösung digitalisiert, also binarisiert.

Ein Nachteil solcher Pulsmittelungsverfahren ist, dass zur Histogrammbildung zunächst die einzelnen digitalisierten oder binarisierten Empfangssignale zu den Einzelpulsen gespeichert werden müssen, und zwar während der Messung und damit sehr schnell. Ein FPGA, der zum Akkumulieren der Histogramme eingesetzt wird, muss genügend Speicher bereitstellen und auch in der Lage sein, die Daten schnell genug abzulegen, also eine große Speicherbandbreite aufweisen. Das erzwingt die Verwendung eines sehr leistungsfähigen und damit teuren FPGAs, obwohl die übrigen Spezifikationen wie Gatterzahl und dergleichen auch mit einem kostengünstigeren FPGA erfüllt werden könnten. Der Speicherbedarf skaliert sehr ungünstig linear mit der Anzahl der in ein Histogramm eingehenden Einzelmessungen. Die Schwelle zur Binarisierung des Empfangssignals wird relativ niedrig gesetzt, so dass sie zu 10%-50% der Zeitpunkte übertroffen wird, also mit anderen Worten mitten in das Rauschband. Ein überschwelliges Signal ist daher auch kein seltenes Ereignis, das eine komprimierte Datenrepräsentation zuließe.

In der EP 2 942 644 B1 wird statt einer Digitalisierung oder Binarisierung mit nur einem Bit eine Mehrschwellenabtasteinheit eingesetzt. So wird eine gewisse Amplitudenauflösung der Empfangssignale gewonnen, die mittels eines zusätzlichen Dehnungsfilters für eine noch genauere Lokalisierung des Empfangszeitpunktes genutzt wird. Dadurch fallen aber sogar noch mehr Daten an, nämlich je Abtastzeitpunkt und Einzelmessung nicht mehr nur ein Bit, sondern sogar mehrere Bit.

Das Datenproblem verschärft sich noch, wenn das zeitliche Abtastraster verfeinert wird, weil dann noch mehr Zeitschritte und damit Daten zu diesen Zeitschritten anfallen. Ein feineres Zeitraster wird aber grundsätzlich angestrebt, weil damit genauere Abstandsmessungen möglich sind.

Es gibt auch andere Ansätze zur Entfernungsmessung, die speziell auf SPADs (Single-Photon Avalanche Detector) abgestimmt sind. Dabei werden nicht digitalisierte oder binarisierte Empfangssignale betrachtet, sondern es wird direkt mittels TDCs (time-todigital converter) die Laufzeit gemessen. SPADs lösen aber auch durch Dunkelrauschen oder Fremdlicht Störereignisse aus, die nicht von Messereignissen unterscheidbar sind, und müssen daher statistisch ausgewertet werden. In einem FPGA-basierten Sensor hat man aber gar keinen Zugriff auf die einzelnen SPADs, sondern nur auf deren Summensignal. Mit einem ASIC ist der Einzelzugriff prinzipiell denkbar, aber die Entwicklung eines solchen ASIC ebenso wie spätere Anpassungen sind extrem aufwändig, während ein FPGA auch umprogrammiert werden kann.

Die EP 3 185 038 A1 offenbart einen derartigen entfernungsmessenden optoelektronischen Sensor mit SPAD-Empfänger. Zur Begrenzung der Datenmenge werden einerseits nicht die Signale der einzelnen SPADs aufgezeichnet, sondern nur die mittels TDC gemessenen Einzellichtlaufzeiten. Zudem werden solche Einzellaufzeiten auch nur akkumuliert, wenn sie innerhalb eines Zeitfensters mit einer vorhergehenden Einzellichtlaufzeit übereinstimmen. Das basiert auf der Annahme, dass Messereignisse eines gemeinsam von den SPADs beobachteten Nutzechos gehäuft auftreten, Störereignisse dagegen zufällig verteilt liegen. Ohne Informationen aus den einzelnen SPADs, in diesem Fall die dort jeweils gemessenen Einzellichtlaufzeiten, ist ein solches Verfahren aber nicht möglich.

Die US 2012/162632 A1 beschreibt einen weiteren optischen Entfernungsmesser mit SPADs. Hier werden die gemessenen Entfernungen in einem besonderen, durch seinen Inhalt adressierten Speicher kumuliert, um eine Häufigkeitsverteilung zu bekommen. Das unterliegt ähnlichen Voraussetzungen wie die EP 3 185 038 A1. Zusätzlich wird hier noch ein besonderer, durch seinen Inhalt adressierter Speicher benötigt.

Aus der EP 1 843 171 A1 ist eine Distanzmessvorrichtung nach dem Lichtlaufzeitprinzip bekannt, die das Empfangssignal einmal bis zu einem Startzeitpunkt und ein weiteres Mal bis zu einem Empfangszeitpunkt des Lichtpulses integriert. Die Differenz der Integrale ist dann proportional zur gesuchten Lichtlaufzeit. In einer Ausführungsform wird der Startzeitpunkt in einem optischen Referenzkanal bestimmt.

Es ist daher Aufgabe der Erfindung, den Aufbau eines optoelektronischen Sensors für eine Lichtlaufzeitmessung zu vereinfachen.

Diese Aufgabe wird durch einen optoelektronischen Sensor und ein Verfahren zur Erfassung und Abstandsbestimmung eines Objekts in einem Überwachungsbereich nach Anspruch 1 beziehungsweise 12 gelöst. Ausgangspunkt ist ein Lichtlaufzeitverfahren wie einleitend beschrieben mit mehreren Einzelmessungen durch wiederholt ausgesandten und wieder empfangenen Lichtpulse. Das jeweilige Empfangssignal wird mit einer hohen Schwelle und einer niedrigen Schwelle abgetastet. Die Abtastung erfolgt in einer ersten und zweiten Abtasteinheit, die vorzugsweise jeweils als Binarisierer oder Komparator ausgebildet sind. Es ist ein Speicher vorgesehen, um darin Abtastwerte oder daraus abgeleitete Größen mehrerer Einzelmessungen abzulegen. Eine Steuer- und Auswertungseinheit bestimmt mit Hilfe der in dem Speicher abgelegten Daten aus mehreren Einzelmessungen einen Messwert für die Lichtlaufzeit.

Die Erfindung geht nun von dem Grundgedanken aus, nicht zu jeder Einzelmessung Daten zu speichern, und dann vorzugsweise auch nicht alle Abtastwerte, sondern nur daraus abgeleitete Größen, wie Zeitpunkte von Schwellenübergängen oder summarische statistische Größen. Deshalb werden mit der niedrigen Schwelle erzeugte Abtastwerte oder daraus abgeleitete Größen nur dann in dem Speicher abgelegt, wenn in derselben Einzelmessung auch die hohe Schwelle zu mindestens einem Zeitpunkt überschritten war. Das mit der hohen Schwelle bewertete Empfangssignal darf also nicht zu einem Nullsignal geführt haben. Umgekehrt lässt sich das gleichermaßen ausdrücken, nämlich dass das Ergebnis der Abtastung mit der niedrigen Schwelle verworfen wird, wenn in derselben Einzelmessung die hohe Schwelle zu keinem Zeitpunkt überschritten wurde. Da in diesem Fall die Abtastung mit der hohen Schwelle als Nullsignal keine nutzbare Information enthält, werden vorzugsweise für diese Einzelmessung auch keine Abtastwerte der zweiten Abtasteinheit oder daraus abgeleitete Größen gespeichert.

Die Erfindung hat den Vorteil, dass deutlich weniger Daten gespeichert werden müssen. Deshalb können auch kostengünstigere Bauteile eingesetzt werden, beispielsweise einfachere FPGAs mit relativ wenig Speicherblöcken und Speicherbandbreite. Auch die Auswertung der reduzierten Datenmenge vereinfacht sich, so dass weniger Auswertungskapazitäten benötigt werden. Damit verbunden sind Vorteile bei der Wärmeentwicklung und Gehäusegröße. Alternativ können die gewonnenen Ressourcen genutzt werden, um das Zeitraster weiter zu verfeinern und/oder zu verlängern. Dann wird eine höhere Präzision und Reichweite möglich, da trotz höherer Dichte von Zeitpunkten und verlängertem Messintervall der Speicherrahmen nicht gesprengt wird. Eine andere Möglichkeit, die frei gewordenen Ressourcen zu nutzen, ist die Auswertung mehrerer Messstrahlen mit gleicher Elektronik, um Entfernungswerte von mehreren Orten zu erfassen.

Die niedrige Schwelle ist bevorzugt so gewählt, dass das Empfangssignal zu 10%-80% der Zeit oberhalb liegt und/oder die hohe Schwelle ist gewählt, dass das Empfangssignal zu höchstens 10% der Zeit oberhalb liegt. Die niedrige Schwelle entspricht damit derjenigen nach dem Stand der Technik, die häufig und auch von Empfangssignalen ohne Nutzsignalanteil überschritten ist. Sie liegt typischerweise bei 50%, aber andere Werte im genannten Intervall sind auch denkbar. Die hohe Schwelle dagegen soll nur selten übertroffen werden, nach Möglichkeit ausschließlich durch das Nutzsignal. Es ist daher auch eine strengere hohe Schwelle denkbar, die beispielsweise nur zu 5%, 1%, 0,5 %, 0,1% der Zeit und noch weniger überschritten wird. Diese Schwellen werden parametriert oder während des Betriebs eingelernt. Die Kriterien lassen sich auch bezüglich eines Rauschpegels verstehen: Die niedrige Schwelle liegt noch im Rauschband, etwa in dessen 1-Sigma-Umgebung, während die hohe Schwelle erst auf signifikant höhere Empfangspegel beispielsweise oberhalb einer n-Sigma-Umgebung mit n≥3 reagiert. Da der remittierte Lichtpuls ein seltenes Ereignis ist, kann man die genannten Kriterien ebenso auf den reinen Rauschpegel ohne ausgesandte Lichtpulse wie den Messbetrieb beziehen, statistisch sauberer ist es, eine Situation bei inaktivem Lichtsender zu betrachten, also nur das Rauschen. Die Auslegung der Schwellen kann auch nicht bloß auf einzelne Zeit- beziehungsweise Samplingpunkte bezogen sein, sondern die kumulierte Wahrscheinlichkeit aller Samplingpunkte über eine Messperiode, also das Zeitintervall einer Einzelmessung, oder eines Teilintervalls davon etwa entsprechend einem kleinen Vielfachen der Pulsbreite. Eine hohe Schwelle, bei der das Empfangssignal zu höchstens 1% der Zeit oberhalb liegt, bedeutet dann, dass sie nur in 1% der Einzelmessungen oder in 1% von Teilintervallen einer bestimmten an der Pulsbreite orientierten Dauer allein aufgrund des Rauschens mindestens einmal überschritten ist.

Die Steuer- und Auswertungseinheit ist bevorzugt dafür ausgebildet, die hohe Schwelle dynamisch anzupassen, insbesondere innerhalb einer Einzelmessung in Abhängigkeit von der Entfernung, die der ausgesandte Lichtpuls bereits zurückgelegt hat, von einem Abstand des Objekts und/oder von einer Remission des Objekts. Der remittierte Lichtpuls von einem nahen und/oder hellen Objekt ist deutlich stärker als derjenige von einem fernen und/oder dunkeln Objekt. Darauf kann die hohe Schwelle adaptiert werden, damit sie bei starken zu erwartenden Nutzsignalen noch stärker vom Rauschen trennt und für schwächere zu erwartende Nutzsignale nicht zu viel Empfindlichkeit verloren geht. Bei einer Lichtlaufzeitmessung ist zu jedem Zeitpunkt nach Aussenden des Lichtpulses klar, aus welcher Entfernung ein aktuell empfangener remittierter Lichtpuls stammen würde, wobei natürlich der Rückweg mit berücksichtigt werden muss. Daher kann man die hohe Schwelle dynamisch innerhalb einer Einzelmessung absenken, um dem abstandsbedingten Intensitätsverlust Rechnung zu tragen. Außerdem ist denkbar, die hohe Schwelle auf eine erwartete Objektentfernung oder -remission einzustellen, wobei die Erwartung durch frühere Messung oder allgemeine Annahmen gegeben sein kann beziehungsweise einer Messanforderung entspricht.

Die Steuer- und Auswertungseinheit ist bevorzugt dafür ausgebildet, einen Zeitpunkt zu speichern, zu dem die zweite Abtasteinheit einen Schwellenübergang des Empfangssignals bezüglich der hohen Schwelle feststellt. Dies ist ein Beispiel einer aus den Abtastwerten abgeleiteten Größe, um nicht das ganze mit der hohen Schwelle binarisierte Empfangssignal speichern zu müssen. Das Ergebnis entspricht demjenigen eines TDC, der auf fallende beziehungsweise steigende Flanken eines entsprechend der hohen Schwelle deutlich ausgeprägten Peaks im Empfangssignal reagiert und so Lichtlaufzeiten bis zum Anfang und/oder Ende von remittierten Lichtpulsen misst. Im Prinzip könnten auch anstelle der Abtastwerte der ersten Abtasteinheit nur Zeitpunkte von Schwellenübergängen abgespeichert werden. Da die niedrige Schwelle aber ständig allein durch Rauschen über- und unterschritten wird, sind die Schwellenübergänge zu häufig, um dadurch effektiv Speicherplatz einzusparen.

Die Steuer- und Auswertungseinheit ist bevorzugt dafür ausgebildet, Abtastwerte der ersten Abtasteinheit nur in einer zeitlichen Umgebung eines von der zweiten Abtasteinheit festgestellten Schwellenübergangs zu speichern. Dazu wird vorzugsweise auch der Beginn der zeitlichen Umgebung abgespeichert, um sie in der späteren Auswertung zeitlich einordnen zu können. Das ist nicht erforderlich, wenn die Abtastwerte der ersten Abtasteinheit wie in einer später erläuterten Ausführungsform nur für eine Intensitätsmessung genutzt werden. Die Beschränkung auf die zeitliche Umgebung führt zu einer weiteren erheblichen Einsparung von Speicherbedarf, und Messdaten außerhalb der Umgebung tragen zu einer Lichtlaufzeitmessung ohnehin nicht bei. Die Dauer der zeitlichen Umgebung wird vorzugsweise an der Pulsbreite des ausgesandten Lichtpulses orientiert und beträgt beispielsweise ein bis fünf Pulsbreiten. Damit werden die relevanten Messpunkte bereits zuverlässig erfasst. Es ist auch denkbar, abgeleitete Größen zu speichern, etwa den Zeitpunkt eines remittierten Lichtpulses oder die Pulsform beschreibende Größen wie dessen Breite und Amplitude.

Die Steuer- und Auswertungseinheit ist bevorzugt dafür ausgebildet, Abtastwerte der ersten Abtasteinheit oder daraus abgeleitete Größen nur für eine vorgegebene Anzahl von Einzelmessungen zu speichern, insbesondere für diejenigen Einzelmessungen mit den meisten Überschreitungen der hohen Schwelle in der zweiten Abtasteinheit. In dieser Ausführungsform steht beispielsweise nur Speicher für fünf bis zehn Einzelmessungen zur Verfügung, oder sogar nur für entsprechend viele Umgebungen wie im Vorabsatz erläutert. Damit genügt bereits ein sehr kleiner Speicher. Die verfügbaren Speicherbereiche werden mit den mutmaßlich verlässlichsten Abtastwerten oder daraus abgeleiteten Größen belegt und gegebenenfalls auch im Laufe der wiederholten Einzelmessungen von einer noch geeigneteren Einzelmessung überschrieben. Ein Kriterium ist die Häufigkeit, mit der in der jeweiligen Einzelmessung die hohe Schwelle überschritten ist, weil das ein klares Anzeichen besonders ausgeprägter Messsignale ist. Erneut ist auch denkbar, abgeleitete Größen wie den Zeitpunkt eines remittierten Lichtpulses oder dessen Pulsform beschreibende Größen zu speichern.

Es wäre alternativ denkbar, Abtastwerte direkt aufzuaddieren. Dadurch wird lediglich ein Speicher benötigt, der nur eine einzige Einzelmessung oder sogar nur eine zeitliche Umgebung eines erwarteten Objektabstands aufnehmen kann und dessen Zellen während der Einzelmessungen modifiziert werden. Dann besteht aber kein Zugriff mehr auf die Ergebnisse der Einzelmessungen. Es ist also nicht möglich, im Nachhinein anhand der hohen Schwelle als weniger signifikant erkannte Einzelmessungen herauszufiltern. Außerdem können Einzelmessungen nicht neu gruppiert werden, was gerade bei einem Laserscanner äußerst nützlich ist, bei dem der ausgesandte Lichtpuls in jeder Einzelmessung aufgrund der zwischenzeitlichen Scanbewegung einen etwas anderen Winkelbereich abtastet.

Die Steuer- und Auswertungseinheit ist bevorzugt dafür ausgebildet, anstelle von Abtastwerten nur summarische Kennwerte abzuspeichern, insbesondere einen Mittelwert von Abtastwerten. Höhere Momente wie die Varianz sind ebenfalls möglich. Sowohl Mittelwert wie Varianz lassen sich on-the-fly mit nur einer Speicherzelle durch Bilden der Summe der Abtastwerte beziehungsweise der Summe der Quadrate der Abtastwerte bestimmen. Solche Kennwerte sind neben den schon genannten Schwellenübergängen oder beschreibenden Größen einer Pulsform ein weiteres Beispiel von aus den Abtastwerten abgeleiteten Größen. Aus den Kennwerten kann mit geeigneter Modellierung des Rauschens, insbesondere von SPADs, sowie der Lichtpulse die Lichtlaufzeit rekonstruiert werden.

Zwischen Lichtempfänger und zweiter Abtasteinheit ist bevorzugt ein analoges, auf eine Pulslänge der Lichtpulse abgestimmtes Filter angeordnet. Ein solches Filter erhöht die Sensitivität für tatsächliche Messereignisse, führt aber auch einen intensitätsabhängigen Laufzeitfehler ein. Wenn aber die Abtastung mit der hohen Schwelle nur dazu dient, signifikante Messereignisse herauszufiltern und die eigentliche Messung mit den Ergebnissen der Abtastung der niedrigen Schwelle arbeitet, ist ein solcher Laufzeitfehler nicht relevant. Alternativ wird die Abtastung mit der hohen Schwelle sehr wohl für die Laufzeitmessung herangezogen und der intensitätsabhängige Laufzeitfehler aus der Abtastung mit der niedrigen Schwelle korrigiert, die nicht durch das Filter verzerrt ist, wie sogleich beschrieben.

Die Steuer- und Auswertungseinheit ist bevorzugt dafür ausgebildet, aus Abtastwerten der ersten Abtasteinheit oder daraus abgeleiteten Größen eine Intensität des remittierten Lichtpulses zu bestimmen. Die Intensität wird insbesondere für eine Helligkeits- oder Schwarz-Weiß-Korrektur der Lichtlaufzeit genutzt. Das kann eine Aufgabenteilung darstellen: mit der hohen Schwelle wird die Lichtlaufzeit gemessen, mit der niedrigen Schwelle werden die intensitätsabhängigen Laufzeitfehler korrigiert. Alternativ werden die Abtastwerte der ersten Abtasteinheit oder daraus abgeleitete Größen auch für eine Lichtlaufzeitmessung genutzt, um diejenige aus der hohen Schwelle zu verbessern oder zu plausibilisieren. Eine Intensitätsmessung aus der Abtastung mit der zweiten Abtasteinheit ist im Prinzip denkbar, insbesondere anhand der Differenz zwischen Zeitpunkten einer Schwellüberschreitung und anschließenden Schwellunterschreitung. Die ist aber vergleichsweise unpräzise, da nur noch ein kleiner Teil des durch den remittierten Lichtpuls erzeugten Peaks im Empfangspuls über der hohen Schwelle liegt und dies die Pulsform nicht mehr ausreichend repräsentiert. Das gilt erst recht, wenn das im vorigen Absatz genannte analoge Filter vorgesehen ist, das die Messinformation hinsichtlich der Pulsform verändert.

Der Lichtempfänger weist bevorzugt eine Vielzahl von SPAD-Lichtempfangselementen auf, die ein gemeinsames Empfangssignal erzeugen. Das vereinfacht den Aufbau des Sensors, weil die SPADs nicht wie beispielsweise in einem entsprechend angepassten ASIC einzeln ausgelesen werden müssen. Dafür fehlt dann Messinformation, nämlich welche SPAD-Zelle tatsächlich jeweils ausgelöst hat. Viele der einleitend genannten Messverfahren beruhen gerade auf solch differenzierten Messinformationen. Das erfindungsgemäße Verfahren kommt aber auch mit dem summarischen Empfangssignal zurecht und kann daher beispielsweise auch mit einem FPGA implementiert werden. Für SPAD-Lichtempfänger ist ein dichtes Zeitraster der Abtastungen besonders bevorzugt, um die aufgrund der Totzeiten entstehenden, intensitätsabhängigen Pulsformen der remittierten Lichtpulse im Empfangssignal auswerten zu können. Außerdem wird durch das erfindungsgemäße Verfahren ein Vorteil von SPADs, nämlich deren hohe Analogbandbreite, auch wirklich genutzt. Der auf den ersten Blick hohe Speicherbedarf einer schnellen Abtastung ist durch die selektive Speicherung ausgeglichen.

Die Steuer- und Auswertungseinheit ist bevorzugt dafür ausgebildet, nach Überschreiten der hohen Schwelle in der zweiten Abtasteinheit für ein Zeitintervall weitere Überschreitungen der hohen Schwelle zu ignorieren. Damit soll ein Signalpuls, der die hohe Schwelle überschreitet, möglichst nur einmal berücksichtigt werden. Das Zeitintervall wird dazu vorteilhaft abhängig von der Pulsbreite gewählt. Ansonsten würden sehr viele redundante Ereignisse beziehungsweise direkt aufeinanderfolgende Zeitstempel den vorhandenen Speicher blockieren, der vorzugsweise nur für wenige Ereignisse ausgelegt ist. Es besteht insbesondere die Möglichkeit, für diesen Zweck die Empfindlichkeit der Lichtempfangselemente vorübergehend herabzusetzen, wodurch die hohe Schwelle vorübergehend nicht mehr übertroffen ist, obwohl das Empfangssignal an sich stark genug dafür wäre. Das Deaktivieren erfolgt bei SPADs vorzugsweise durch Absenken der Vorspannung der SPADs unter die Durchbruchspannung, womit sie vorübergehend um Größenordnungen weniger empfindlich und für praktische Belange inaktiv werden. Das führt nicht nur zu dem gewünschten vorübergehenden Ignorieren einer Überschreitung der hohen Schwelle, sondern verhindert auch, dass zu viele SPADs aktiv werden und dadurch die aufgenommene Leistung unnötig erhöhen beziehungsweise in ihre Totzeit übergehen und in einem mehrzielfähigen System für die Messung fernerer Ziele nicht mehr verfügbar sind.

Die Steuer- und Auswertungseinheit ist bevorzugt auf einem digitalen Baustein, insbesondere in programmierbarer Logik, in ASIC (Application Specific Integrated Circuit) oder auf einem FPGA (Field Programmable Gate Array) implementiert. Ein derartiger digitaler Baustein ist vergleichsweise kostengünstig und dennoch in der Lage, die Anforderungen an eine hochpräzise Messung zu erfüllen und dabei noch sehr viele der geforderten Funktionen mit zu implementieren, statt dafür zusätzliche Bausteine vorzusehen. Unter digitalem Baustein soll hier und im Folgenden jegliche konfigurierbare digitale Auswertung gemeint sein, die durch Vorkonfiguration der digitalen Verschaltung des Bausteins auf die Anwendung angepasst ist, statt wie bei einem echten Mikroprozessor durch Ablauf eines Programms auf einer universellen Auswertungseinheit zu erfolgen. Die derzeit bevorzugte Variante einer solchen programmierbaren Logik ist ein FPGA. Deshalb wird im Folgenden mehrfach von FPGA stellvertretend für die genannte Familie von digitalen Bausteinen gesprochen, die Erfindung ist aber darauf nicht beschränkt. Es wurde schon darauf hingewiesen, dass aufgrund der Erfindung ein SPAD-Lichtempfänger mit nur summarischem Empfangssignal in Kombination mit einem FPGA eingesetzt werden kann und kein eigenes ASIC entwickelt werden muss, um SPAD-Zellen einzeln auszuwerten.

Die erste Abtasteinheit und/oder die zweite Abtasteinheit ist bevorzugt über Eingänge des digitalen Bausteins implementiert. Dadurch sind keine zusätzlichen Bauelemente erforderlich, oder jedenfalls nur einfachste analoge Schaltelemente beispielsweise ein Widerstandsnetz, das das Empfangssignal den Abtasteinheiten zuführt. Alternativ sind auch eigene Abtasteinheiten als separate Schaltungselemente möglich, die dann den Vorteil haben, dass ihre Spezifikation von derjenigen des digitalen Bausteins unabhängig ist, was besonders in sicherheitstechnischer Anwendung eine garantierbare Funktion der Hardware vereinfacht.

Zwischen Lichtempfänger und erster Abtasteinheit beziehungsweise zweiter Abtasteinheit ist vorzugsweise eine analoge Vorverarbeitungsschaltung mit einem Bipolarfilter zur Umwandlung des zunächst unipolaren Empfangssignals in ein bipolares Signal angeordnet. Die remittierten Lichtpulse bilden in dem Empfangssignal einen Peak und sind demnach unipolar, da Lichtsignale nicht negativ werden können. Das Bipolarfilter wandelt das unipolare Empfangssignal in ein bipolares Signal beispielsweise als eine Schwingung mit mindestens einem Maximum, einem Minimum und einem Nulldurchgang dazwischen. Als Bipolarfilter eignet sich insbesondere ein Bandpassfilter oder ein Differenzierer. Die Vorverarbeitungsschaltung kann zusätzlich einen Verstärker, insbesondere einen Transimpedanzverstärker, vor dem Bipolarfilter aufweisen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: ein Blockschaltbild eines entfernungsmessenden Sensors;
- Fig. 2: ein Blockschaltbild eines Messkerns für die Signalverarbeitung in dem Sensor gemäß Figur 1;
- Fig. 3: ein Blockschaltbild für die zweifache Abtastung eines Empfangssignals mit hoher und niedriger Schwelle mit anschließender Selektion zu speichernder Abtastwerte;
- Fig. 4: ein Blockschaltbild zur weiteren Erläuterung der Bestimmung einer Lichtlaufzeit mit zweifacher Abtastung gemäß Figur 3;
- Fig. 5: eine Darstellung der Wahrscheinlichkeit von Schwellenüberschreitungen für Rausch- und Nutzsignal zur Erläuterung der Reichweise des erfindungsgemäßen Verfahrens gegenüber herkömmlicher Abtastung; und
- Fig. 6: eine Darstellung des Signal-Rauschverhältnisses in Abhängigkeit von der Schwelle.

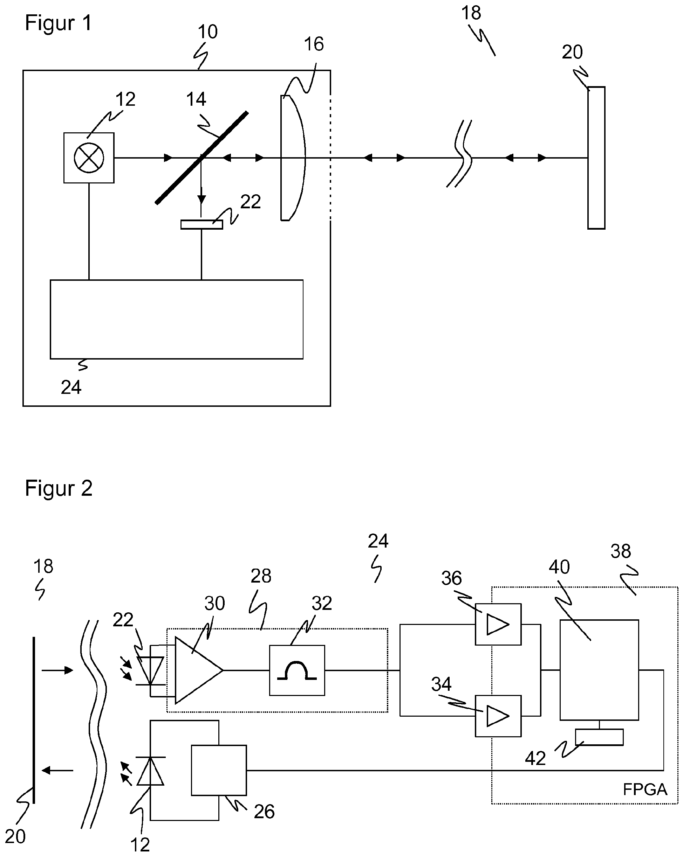

Figur 1 zeigt ein Blockschaltbild eines entfernungsmessenden Sensors 10 in einer Ausführungsform als eindimensionaler optoelektronischer Entfernungstaster. Ein Lichtsender 12 ist so ausgerichtet, dass sein Sendelicht einen Teilerspiegel 14 transmittiert und anschließend über eine Optik 16 in einen Überwachungsbereich 18 gelangt. Dort wird das Sendelicht, wenn sich ein Objekt 20 im Strahlengang befindet, daran reflektiert oder remittiert und kehrt erneut durch die Optik 16 zu dem Teilerspiegel 14 zurück, wo es in einem Lichtempfänger 22 gespiegelt und dort erfasst wird. Die koaxiale Teilerspiegelanordnung ist rein beispielhaft zu verstehen, die Erfindung umfasst ebenso andere Anordnungen ohne Teilerspiegel wie beispielsweise biaxiale Ausrichtung der optischen Achsen von Lichtsender 12 und Lichtempfänger 22 und einer Doppelaugenoptik. Auch die Erläuterung an einem eindimensionalen optoelektronischen Sensor ist nur exemplarisch zu verstehen, denn ebenso kann der Sensor 10 ein mehrdimensionales System sein, wie ein mehrstrahlige Taster, ein Lichtgitter oder ein Laserscanner, bei dem die Messrichtung beispielsweise mittels eines Drehspiegels oder eines drehbaren Abtastkopfes mit Lichtsender 12 und Lichtempfänger 22 periodisch variiert wird, so dass mit einem oder mehreren Scanstrahlen mindestens eine Überwachungsebene oder sogar ein Raumbereich abgetastet wird. Ein weiteres Beispiel für den Sensor 10 ist eine Lichtlaufzeitkamera mit ortsaufgelöstem Lichtempfänger 22, der für seine einzelnen Pixel oder Gruppen davon jeweils einen Abstandswert bestimmt.

Ein Messkern 24 steuert den Lichtsender 12 an und wertet die Signale des Lichtempfängers 22 aus. Um für eine Abstandsmessung des Objekts 20 eine Lichtlaufzeit zu ermitteln, werden Lichtpulse ausgesandt und wieder empfangen, und die Differenz zwischen Sende- und Empfangszeitpunkt wird bestimmt. Diese Auswertung erfolgt aber nicht auf Basis nur eines einzigen Lichtpulses, sondern gemeinsamer Auswertung mehrerer Einzelmessungen mit jeweils einem ausgesandten und wieder empfangenen Lichtpuls, wobei die Lichtpulse insbesondere wegen eines einzuhaltenden Laserbudgets aufgrund von Augenschutzbetrachtungen relativ schwach sind. Ein weiterer Grund für die schwachen Laserpulse ist, dass diese preisgünstiger erzeugt werden können als starke Laserpulse, die Laserdioden sowie deren Ansteuerelektronik fallen dann einfacher und günstiger aus.

Figur 2 zeigt ein Blockschaltbild des Messkerns 24. In dem Sendepfad ist neben dem eigentlichen Lichtsender 12 noch eine Treiberschaltung 26 vorgesehen, während in dem Empfangspfad der Lichtempfänger 22 das Empfangssignal über einen analogen Vorverarbeiter 28 mit einem Vorverstärker 30 und einem Bipolarfilter 32, eine erste Abtasteinheit 34 mit niedriger Schwelle und eine zweite Abtasteinheit 36 mit hoher Schwelle einem digitalen Baustein 38 mit der eigentlichen Steuerung und Auswertungseinheit 40 mit einem Speicher 42 zuführt. Der digitale Baustein 38 ist beispielhaft als FPGA bezeichnet, alternativ ist ein ASIC oder ein anderer digitaler Baustein möglich.

Mittels der Treiberschaltung 26 wird von dem Lichtsender 12 für eine von beispielsweise n=10, ...100 oder mehr Einzelmessungen jeweils ein Lichtpuls ausgesandt. Die Sendepulse können zwischen den Einzelmessungen einen gezielten zeitlichen Jitter aufweisen, um so die Flanken zu verwaschen und insgesamt in an sich bekannter Weise eine höhere Zeitauflösung zu erreichen.

Der jeweilige ausgesandte Lichtpuls wird an dem Objekt 20 zurückgeworfen, und der Lichtempfänger 22 erzeugt aus dem remittierten Lichtpuls ein Empfangssignal. Der Lichtempfänger 22 ist als Photodiode oder APD ausgebildet, vorzugsweise als SPAD-Lichtempfänger und nochmals vorzugsweise nur mit einem summarischen, gemeinsamen Empfangssignal aller seiner SPAD-Zellen.

In dem analogen Vorverarbeiter 28 wird der Pegel des Empfangssignals zunächst von dem Vorverstärker 30 angehoben, etwa einem Transimpedanzverstärker. Das Bipolarfilter 32, das beispielsweise ein Bandpassfilter oder ein Differenzierer sein kann, wandelt das unipolare Empfangssignal in ein bipolares Empfangssignal um. Die Empfangspulse des remittierten Lichtpulses werden also in Schwingungen mit mindestens einem negativen Nachschwinger umgesetzt. Der Vorverarbeiter 28 ist rein beispielhaft zu verstehen. Insbesondere sind andere Verstärker denkbar, die Reihenfolge von Vorverstärker 30 und Bipolarfilter 32 kann vertauscht werden, es kann ein Begrenzerverstärker ergänzt werden, auf das Bipolarfilter 32 verzichtet werden und dergleichen.

Das derart aufbereitete analoge Empfangssignal wird einmal von der ersten Abtasteinheit 34 mit einer niedrigen Schwelle und einmal von der zweiten Abtasteinheit 36 mit einer hohen Schwelle verglichen, wobei den Namen entsprechend die hohe Schwelle höher ist als die niedrige Schwelle und deren vorteilhafte genauere quantitative Auslegung noch erläutert wird. Die Abtasteinheiten 34, 36 sind insbesondere als Komparatoren ausgebildet und können über Eingänge des digitalen Bausteins 38 beziehungsweise FPGA implementiert sein wie dargestellt oder alternativ als eigene Bausteine. Anstelle von Komparatoren können auch andere geeignete Schaltungselemente für einen Schwellenvergleich verwendet werden, etwa Limiter-Verstärker, die ohne DC-Offsetkorrektur gegen eine Vergleichsspannung messen. Prinzipiell ist auch statt nur einwertiger Abtastung mit einer einzigen niedrigen Schwelle in der ersten Abtasteinheit 34 eine Mehrschwellenabtastung für eine gewissen Amplitudenauflösung denkbar, vorzugsweise mit wenigen, geschickt gelegten zusätzlichen Schwellen wie in der einleitend genannten EP 2 942 644 B1 beschrieben. Dann sind auch die zusätzlichen Schwellen niedriger als die hohe Schwelle der zweiten Abtasteinheit 36.

Die jeweiligen digitalen, vorzugsweise binarisierten Abtastwerte der beiden Abtasteinheiten 34, 36 stehen nun der Steuer- und Auswertungseinheit 40 zur Verfügung, die nach den n Einzelmessungen einen Messwert für die Lichtlaufzeit und mit Hilfe der konstanten Lichtgeschwindigkeit unter Berücksichtigung des Rückwegs und möglicher Kalibrierungsanpassungen auf den Abstand zu dem Objekt 20 berechnet. Im Gegensatz zum herkömmlichen Vorgehen werden dafür nicht sämtliche Abtastwerte in dem Speicher 42 abgelegt oder dort in einem Histogramm gesammelt, sondern nur relevante Abtastwerte oder daraus abgeleitete Größen. Dabei entscheidet die Bewertung mit der hohen Schwelle in der zweiten Abtasteinheit 36, welche Einzelmessungen oder Teilabschnitte davon als relevant angesehen werden.

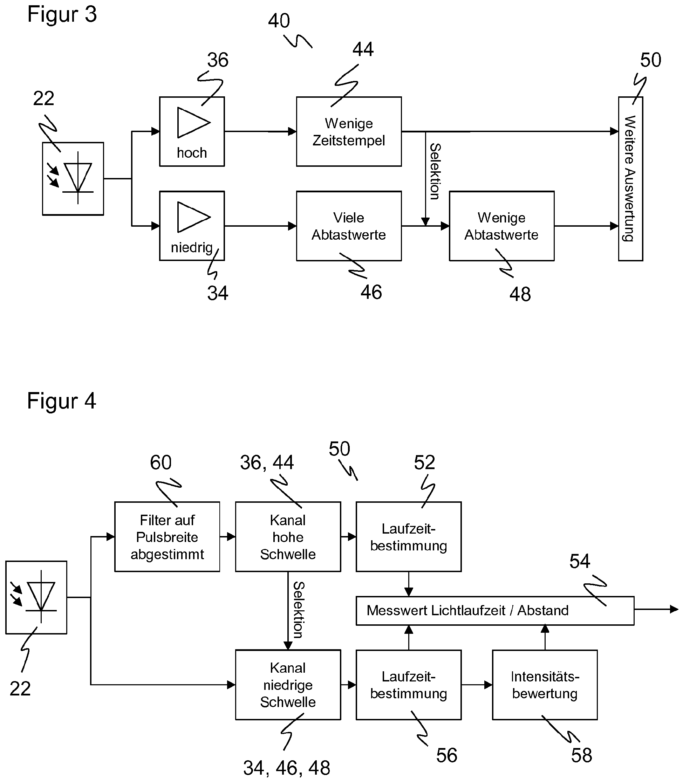

Diese Erzeugung und Selektion der in dem Speicher 42 abzulegenden Daten wird nun unter Bezugnahme auf die Figuren 3 und 4 näher erläutert. Figur 3 zeigt dazu ein Blockschaltbild des Empfangspfades. Der analoge Vorverarbeiter 28 nach dem Lichtempfänger 22 ist hier vereinfachend nicht dargestellt. Die Verarbeitungsblocks nach der zweifachen Abtastung in der ersten Abtasteinheit 34 mit niedriger Schwelle und in der zweiten Abtasteinheit 36 mit hoher Schwelle sind Teil der Steuer- und Auswertungseinheit 40.

Die erfindungsgemäße doppelte Abtastung mit hoher und niedriger Schwelle unterscheidet sich fundamental von einer 2-Bit-Abtastung. Es geht nicht darum, den Empfangspegel mit gegenüber einer Binarisierung höheren Amplitudenauflösung zu erfassen. Vielmehr hat der niedrige Kanal mit der ersten Abtasteinheit 34 eine ganz andere Funktion als der hohe Kanal mit der zweiten Abtasteinheit 36.

Die hohe Schwelle ist so gewählt, dass sie nur selten vom Rauschen übertroffen wird. Beispielsweise liegt das Empfangssignal ohne den remittierten Lichtpuls nur zu 1% der Zeitpunkte oder sogar nur zu 0,1% der Zeitpunkte oder noch seltener oberhalb der hohen Schwelle. Die Abtastung mit der hohen Schwelle reagiert also fast nur auf Messereignisse und zudem selten, je nach spezifischer Auslegung, auf Rauschereignisse. Die niedrige Schwelle dagegen wird wie auch im Stand der Technik, etwa der einleitend genannten EP 1 972 961 A1, oft vom Rauschen erreicht, typischerweise zu 10% bis 50% der Zeitpunkte, oder auch noch häufiger bis zu 60%, 70%, 80% oder sogar 90% der Zeitpunkte. Es ist möglich, sich bei der Wahl der Schwellen an der Standardabweichung des Rauschens zu orientieren. Die niedrige Schwelle bleibt dann in einer 1-Sigma-Umgebung der Nulllage, die hohe Schwelle in einer n-Sigma-Umgebung vorzugsweise mit n≥3.

Wegen der Schwellenauslegung entstehen im hohen Kanal nur selten Abtastwerte ungleich Null. Es wäre denkbar, die von der zweiten Abtasteinheit 36 erzeugten Abtastwerte und damit das mit der hohen Schwelle binarisierte Empfangssignal als Ganzes zu speichern, aber dann wäre im Hinblick auf den Speicherbedarf gegenüber dem herkömmlichen Vorgehen nichts gewonnen. Eine gewisse Ersparnis würde es bieten, die Abtastwerte nur dann zu speichern, wenn in der betreffenden Einzelmessung die hohe Schwelle mindestens einmal übertroffen war. Am meisten Speicher wird jedoch gespart, wenn nur Zeitstempel von Schwellenübergängen gespeichert werden. Das bildet das Verhalten eines TDC nach. Es fallen daher in bevorzugter Ausführungsform in einem Block 44 nur wenige Zeitstempel an, nämlich für ausgeprägte Empfangspulse von remittierten Lichtpulsen, also die zu detektierenden Messereignisse, und für seltene hohe Rauschausschläge. Diese Speicherung als Zeitstempel ist anlog zu dünn besetzten Matrizen in komprimierter Form (CSR, "compressed sparse row" format).

Im niedrigen Kanal liefert die erste Abtasteinheit 34 eine Bitfolge mit recht vielen Einsen entsprechend den 10%-50% Zeitpunkten, zu denen das Empfangssignal stärker ist als die niedrige Schwelle. Diese in einem Block 46 zunächst entstehenden Abtastwerte lassen sich folglich nicht sinnvoll als Zeitstempel komprimieren, da Schwellenübergänge kein seltenes Ereignis sind.

Um die angestrebten kleinen Datenmengen zu erreichen, die im dem Speicher 42 abgelegt werden, erfolgt eine Selektion aus dem hohen Kanal: Es werden in einem Block 48 nur diejenigen Abtastwerte behalten, die zu Einzelmessungen mit mindestens einer Schwellüberschreitung im hohen Kanal gehören, oder noch bevorzugter nur Abtastwerte in einer zeitlichen Umgebung einer Schwellüberschreitung im hohen Kanal. Der hohe Kanal dient folglich als Detektor für Messereignisse, und es werden auch im niedrigen Kanal nur Abtastwerte eines so erkannten Messereignisses behalten. Sonstige Abtastwerte werden als rauschbedingt angesehen und verworfen. Die große Datenmenge der vielen Abtastwerte in dem Block 46 fällt also tatsächlich nicht an, denn dies wird nicht gespeichert, sondern allenfalls innerhalb einer Einzelmessung vorübergehend zwischengepuffert, um zeitliche Umgebungen auch vor einem Schwellenübergang im hohen Kanal in den Speicher 42 übertragen beziehungsweise dort festhalten zu können.

Nach der zweifachen Abtastung und Selektion stehen damit in dem Speicher 42 zu den Einzelmessungen einerseits wenige Zeitstempel aus dem hohen Kanal und andererseits wenige dazu passende Abtastwerte aus dem niedrigen Kanal für die weitere Auswertung 50 zur Verfügung. Es wäre grundsätzlich denkbar, nur die Daten eines der Kanäle in der weiteren Auswertung 50 zu berücksichtigen. Sind das die wenigen Abtastwerte des niedrigen Kanals, so hat der hohe Kanal ausschließlich als Selektor gewirkt, um die Daten des niedrigen Kanals auf die interessanten Zeitbereiche zu reduzieren. Sind es umgekehrt allein die wenigen Zeitstempel des hohen Kanals, so wird der niedrige Kanal effektiv nicht genutzt. Eine solche einfache Abtastung mit nur der einen hohen Schwelle kann prinzipiell funktionieren, entspricht aber nicht dem erfindungsgemäßen Vorgehen.

Figur 4 zeigt ein weiteres Blockschaltbild, um insbesondere die weitere Auswertung 50 näher zu erläutern. Die anhand der Figur 3 beschriebene zweifache Abtastung und Selektion ist hier in Figur 4 nur zusammenfassend als jeweils ein Block 36, 44 für den hohen Kanal und ein Block 34, 46, 48 für den niedrigen Kanal gezeigt.

Aus den Zeitstempeln, die der hohe Kanal erzeugt, wird in einem Block 52 eine Lichtlaufzeit bestimmt. Im Grunde ist jeder Zeitstempel nach Abzug des ebenfalls bekannten zugehörigen Sendezeitpunkts direkt ein Einzelmesswert der Lichtlaufzeit, und es kann der Mittelwert dieser Einzelmesswerte gebildet werden. Weitere Maßnahmen, wie die Kompensation interner Signalwege etwa mittels Referenzmessung oder ein Ausfiltern von singulär gelegenen Zeitstempeln, die eher einem Rauschereignis zuzuordnen sind, oder die Berücksichtigung der bekannten Sendepulsform sind denkbar. Diese oder eine andere statistische Bestimmung der Lichtlaufzeit aus den Zeitstempeln der n Einzelmessungen liefert in einem Block 54 einen Messwert für die Lichtlaufzeit und, mit Hilfe der Lichtgeschwindigkeit, auch für den Objektabstand.

Aus den Abtastwerten des niedrigen Kanals lässt sich in einem Block 56 ebenfalls die Lichtlaufzeit bestimmen. Dazu können insbesondere die Abtastwerte auf den jeweils zugehörigen Sendezeitpunkt ausgerichtet und so addiert werden, und anschließend wird die sich durch die Addition herausbildende Signatur des remittierten Lichtpulses als Empfangszeitpunkt zeitlich lokalisiert. Die beiden in den Blocks 52, 56 bestimmten Lichtlaufzeiten werden dann miteinander verrechnet oder gegenseitig plausibilisiert. Alternativ wird die Lichtlaufzeit nur im hohen Kanal im Block 52 oder nur im niedrigen Kanal im Block 56 bestimmt, oder die Zeitstempel des hohen Kanals und die Abtastwerte des niedrigen Kanals werden gemeinsam im Hinblick auf eine Lichtlaufzeit statistisch ausgewertet.

In dem niedrigen Kanal wird außerdem vorzugsweise in einem Block 58 auch die Intensität des Empfangssignals bewertet. Diese Intensitätsinformation wird wiederum genutzt, um eine Helligkeits- oder Schwarz-Weiß-Korrektur der Lichtlaufzeit beispielsweise mit einer Korrekturtabelle vorzunehmen. Ohne eine derartige Korrektur weißt der gemessene Abstandswert einen intensitätsabhängigen Fehler auf.

Nur die Abtastwerte im niedrigen Kanal bieten noch genug Messinformation, um die Intensität präzise zu bestimmen. Es ist zwar möglich, im hohen Kanal auch Zeitstempel der Schwellenübergänge nach unten hin zu speichern und so anhand der Zeitdifferenz zwischen Schwellüberschreitung und nachfolgender Schwellunterschreitung die Breite des Empfangspulses zu schätzen. Das ist aber gegenüber der Intensitätsmessung in Block 58 im niedrigen Kanal zu ungenau, erst recht in Anbetracht der Tatsache, dass die hohe Schwelle auch einen Großteil eines Messpulses abschneidet und der überstehende Teil die Pulsform nur unzureichend repräsentiert.

In einer bevorzugten Ausführungsform werden der hohe Kanal für die Lichtlaufzeitmessung und der niedrige Kanal für die Intensitätsmessung und anschließende Helligkeitskorrektur der Lichtlaufzeit verwendet. Der Block 56 entfällt dann.

Als weitere bevorzugte Ausführungsform kann in dem hohen Kanal zusätzlich ein analoges Filter 60 zwischen Lichtempfänger 22 und zweiter Abtasteinheit 36 angeordnet sein, insbesondere ein Bandpassfilter für die Passbandbreite, die der Pulsbreite des Lichtpulses entspricht. Damit wird die Sensitivität des hohen Kanals für Messereignisse verbessert. Zugleich werden aber von dem Filter 60 intensitätsabhängige Verzögerungen und damit Laufzeitfehler verursacht. Der niedrige Kanal weist kein solches Filter auf, so dass hieraus die zusätzlichen Laufzeitfehler des hohen Kanals korrigiert werden können. Somit werden die Vorteile einer höheren Selektivität durch das Filter 60 erzielt und zugleich dessen Nachteile aus dem niedrigen Kanal kompensiert. Eine dem analogen Filter 60 entsprechende Nachbearbeitung ist auch in dem niedrigen Kanal denkbar, jedoch erst im digitalen Teil hinter der ersten Abtasteinheit 34 etwa mittels eines FIR-Filters. Eine entsprechende Glättung kann auch vor dem Ablegen in dem Speicher 42 erfolgen, indem Abschnitte des binarisierten Empfangssignals geglättet werden, etwa mit einem Box-Filter der Pulslänge, und anschließend unterabgetastet werden.

Es gibt zahlreiche Varianten, welche Daten nach der beschriebenen Selektion aus dem hohen Kanal in dem Speicher 42 abgelegt werden. Bisher wurde eine vorteilhafte Ausführungsform beschrieben, in der Zeitstempel von Schwellenübergängen aus dem hohen Kanal und damit zeitlich korrelierende Abtastwerte aus dem niedrigen Kanal gespeichert werden. Es sei nochmals betont, dass dies auch Schwellenübergänge in beide Richtungen sein können, also steigende und fallende Flanken des Empfangssignals an der hohen Schwelle. Grundsätzlich können auch aus dem niedrigen Kanal Zeitstempel von Schwellenübergängen statt der Abtastwerte gespeichert werden, aber damit wird regelmäßig wegen zu häufiger Schwellenübergänge kein Speicherplatz eingespart.

Vorzugsweise werden, auch wenn das denkbar ist, nicht alle Abtastwerte der gesamten Einzelmessung aus dem niedrigen Kanal gespeichert, wenn in derselben Einzelmessung die hohe Schwelle mindestens einmal übertroffen ist. Vielmehr ist es vorteilhaft, nur Abtastwerte des niedrigen Kanals in einer zeitlichen Umgebung des Schwellenübergangs in dem hohen Kanal abzuspeichern. Die Umgebung orientiert sich vorzugsweise an der Pulsdauer und beträgt k*Pulsbreite mit k=1..5. Nach den n Einzelmessungen liegen dann in dem Speicher die Abtastwerte des niedrigen Kanals in der Umgebung aller bezüglich der hohen Schwelle signifikanten Ereignisse, also der Messereignisse und der seltenen verbleibenden Rauschereignisse, die auch die hohe Schwelle noch übertreffen.

Es ist ferner denkbar, nur Speicher 42 für eine begrenzte Anzahl, beispielsweise m=5...10, von Abtastwerten von Einzelmessungen oder zeitlichen Umgebungen eines Ereignisses bereitzustellen. Darin werden rollierend jeweils die Einzelmessungen beziehungsweise Umgebungen gespeichert, die aktuell den signifikantesten Ereignissen im hohen Kanal entsprechen, etwa mit den meisten Schwellüberschreitungen im hohen Kanal oder mit dem größten Abstand zwischen einer steigenden und nachfolgenden fallenden Flanke.

Anstelle der Abtastwerte selbst können auch nur summarische Kenngrößen gespeichert werden, etwa ein Mittelwert oder eine Varianz. Das gilt für beide Kanäle. Aus solchen Kenngrößen lässt sich mit geeigneter Modellierung der Empfangszeitpunkt rekonstruieren.

Als Maß für die Intensität kann der zeitliche Abstand zwischen der steigenden und fallenden Flanke eines Pulses genutzt werden, oder bei Verwendung eines Bipolarfilters 32 auch eines nachfolgenden Unterschwingers. Bei aufaddierten Abtastwerten kann auch direkt das Integral in Form der Summe der Abtastwerte über das entsprechende Zeitintervall als Maß der Intensität bestimmt werden. Diese Intensitätsmessung ist im niedrigen Kanal genauer, kann aber auch zumindest ergänzend im hohen Kanal erfolgen.

Die niedrige Schwelle und die hohe Schwelle können parametriert oder eingelernt werden, indem Empfangssignale insbesondere bei inaktivem Lichtsender 12 geeignet ausgewertet werden. Bei einem SPAD-Lichtempfänger mit Strombegrenzung kann die hohe Schwelle schon im Design aus dem maximal möglichen Schrotrauschen entsprechend dem höchsten noch zugelassenen DC-Strom und dem kleinsten Signal aus einer Grenzreichweite des Sensors 10 berechnet werden. Es ist auch möglich, zumindest die hohe Schwelle dynamisch anzupassen. Das ist einmal innerhalb einer Einzelmessung denkbar, denn remittierte Lichtpulse stammen anfangs aus dem Nahbereich und später aus dem Fernbereich, so dass die hohe Schwelle entsprechend abgesenkt werden kann, um den entfernungsbedingten Signalverlust wenigstens teilweise auszugleichen. Andererseits ist eine Anpassung an einen bereits gemessenen Objektabstand oder eine bereits gemessene Intensität denkbar, oder es werden entsprechende Erwartungen aufgestellt, und die hohe Schwelle wird daran angepasst.

Eine Form der dynamischen Anpassung ist, nach dem Überschreiten der hohen Schwelle direkt folgende Überschreitungen zu ignorieren. Dazu gibt es verschiedene Möglichkeiten wie das Heraufsetzen der hohen Schwelle oder das Herabsetzen der Empfindlichkeit des Lichtempfängers 12. Dadurch wird verhindert, dass derselbe Empfangspuls wiederholt berücksichtigt wird und beispielsweise mehrere direkt aufeinanderfolgende Zeitstempel gespeichert werden. Bei einem SPAD-Lichtempfänger 12 könnte dies so aussehen, dass die SPAD-Zellen unmittelbar nach einem Schwellenübergang über die hohe Schwelle inaktiv geschaltet werden. Das ist beispielsweise durch Absenken der Vorspannung unter die Durchbruchspannung möglich und verhindert zusätzlich noch, dass sehr viele oder alle SPAD-Zellen durch denselben remittierten Lichtpuls auslösen und in ihre Totzeit gehen. Werden sie erst nach einer kurzen Zeit etwa entsprechend einer Pulsbreite wieder aktiv geschaltet, so ist der Lichtempfänger auch für zusätzliche, fernere Ziele noch verfügbar, und der Sensor 10 ist mehrecho- oder mehrzielfähig. Mehrere Ziele treten zum Beispiel bei teiltransparenten Objekten 20, Kantentreffen und Nebel auf.

Die zweite Abtasteinheit 36 bildet wie erläutert praktisch einen TDC nach. Anstelle einer Implementierung mittels Komparatoren an FPGA-Eingängen wie erläutert sind auch Carry-Chain Implementierungen in dem FPGA, diskrete oder in ASIC realisierte TDC-Bauteile möglich. Diskrete TDCs können Multi-Hit-TDCs sein, oder Single-Hit-TDCs mit vorgeschaltetem Bauteil zur Verteilung der einkommenden Ereignisse.

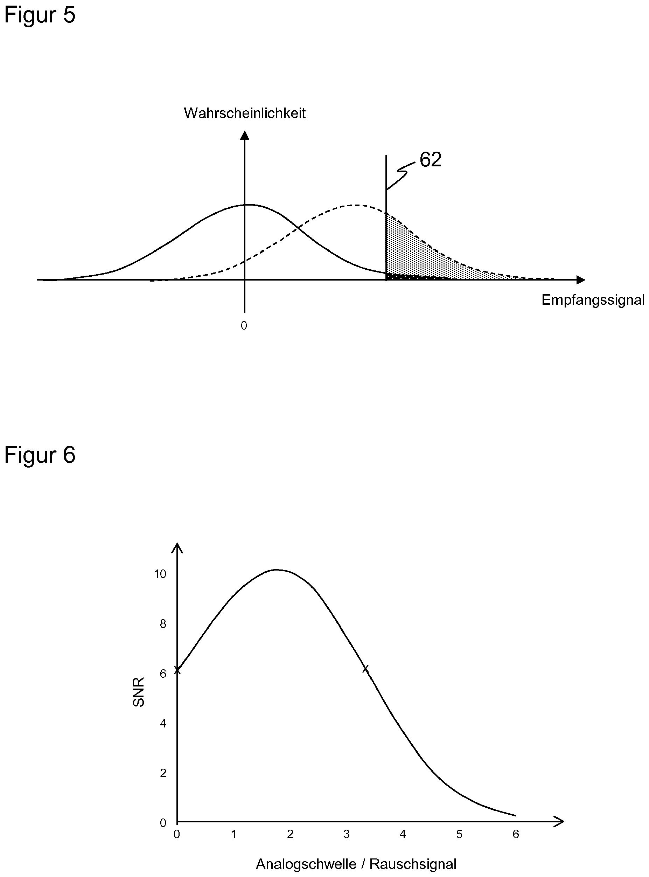

Figur 5 ist eine schematische Darstellung der Wahrscheinlichkeit von Schwellenüberschreitungen für ein Rausch- und ein Nutzsignal. Anhand dieser Darstellung soll erklärt werden, warum die scharfe Selektion durch die hohe Schwelle die Empfindlichkeit des Sensors 10 und damit dessen Reichweite überraschend wenig beeinträchtigt.

Gezeigt ist in Figur 5 einerseits mit durchgezogener Linie die Wahrscheinlichkeitsverteilung für einen um Null zentrierten, normalverteilten Rauschstrom mit Standardabweichung σ=N und andererseits mit gestrichelter Linie die entsprechende Wahrscheinlichkeitsverteilung für einen Signalstrom während eines Empfangspulses bei gleicher Standardabweichung. Für eine gegebene Schwelle 62 entspricht nun die Fläche rechts dieser Schwelle 62, einmal schwarz für den Rauschstrom und einmal grau für den Signalstrom, den Wahrscheinlichkeiten p_{R} und p_{S}, dass die Schwelle 62 in einem Zeitintervall dt übertroffen ist.

Aus diesen beiden Wahrscheinlichkeiten kann nun das Signal-Rauschverhältnis für ein Histogramm berechnet werden, das sich aus den kumulierten, mit der Schwelle 62 binarisierten Empfangssignalen aus n Einzelmessungen zusammensetzt. Dabei muss sichergestellt werden, dass in einigen Einzelmessungen mindestens einmal die Schwelle 62 übertroffen ist, denn sonst gibt es trotz guten Signal-Rausch-Verhältnisses keine gespeicherten Daten.

Figur 6 zeigt dieses Signal-Rauschverhältnis für ein Histogramm auf der Y-Achse in Abhängigkeit von einer nun variabel angenommenen Schwelle 62 auf der X-Achse. Gegenüber einem Anfangswert bei einer Nullschwelle verbessert sich das Signal-Rausch-Verhältnis mit steigender Schwelle 62 zunächst, weil p_{R} deutlich schneller sinkt als p_{S}. Das geht aber nur bis zu einem Maximum, für eine weiter steigende Schwelle 62 sinkt nun p_{S} überkompensierend schnell, so dass bei einem gewissen Wert der Schwelle 62, im Beispiel bei 3,3 N, das Signal-Rauschverhalten wieder dasselbe ist wie bei der Nullschwelle. Es müssen aber bei der höheren Schwelle nur deutlich weniger Ereignisse detektiert werden, denn bei 3,3 N gibt es nur noch 4,5^{∗}10⁻⁴ Rauschereignisse pro dt (siehe nachfolgendes Zahlenbeispiel), die Datenrate wurde daher ganz erheblich reduziert.

Abschließend soll noch ein Zahlenbeispiel gegeben werden, wie stark der Speicherbedarf erfindungsgemäß reduziert werden kann. Angenommen sei eine Pulsdauer tₚᵤₗₛ=1,5 ns, ein Zeitschritt dt=15 ps, eine Anzahl n=60 von Einzelmessungen und eine Messreichweite von 15 m entsprechend einem Zeitintervall für Lichtlaufzeiten von T=100 ns pro Einzelmessung. Die Signalamplitude an einem hier beispielhaft betrachteten SPAD-Lichtdetektor betrage S=1,2 N, wobei N die Standardabweichung des Rauschens ist.

Herkömmlich würde mit einer Schwelle gemessen, die dem Mittelwert des Rauschens entspricht. Bei Einsatz eines Bipolarfilters 32 ist das eine Nullschwelle. Die Auslösewahrscheinlichkeit p_{R} durch das Rauschen liegt je Zeitschritt dt bei 0,5, die Auslösewahrscheinlichkeit p_{S} durch den Signalstrom während eines Empfangspulses bei 0,88. Es resultiert ein Signal-Rauschverhältnis von 6 für ein Histogramm entsprechend den Erläuterungen zu Figur 6, und gespeichert werden müssen 6667 Bit pro Einzelmessung, nämlich T/dt. Sollen die Daten nicht direkt als Histogramm kumuliert werden, sondern einzelnen Daten im Speicher 42 verfügbar sein, so multipliziert sich das noch mit n. Bei Akkumulation in einem Histogramm multipliziert sich der Speicherbedarf stattdessen mit log₂(n).

Erfindungsgemäß sei die hohe Schwelle bei 3,3*N gewählt, die niedrige Schwelle so wie die herkömmliche Schwelle beim Mittelwert des Rauschens beziehungsweise als Nullschwelle. Es werden fünf Zeitstempel pro Einzelmessung gespeichert. Das genügt im Allgemeinem, da die hohe Schwelle nur sehr selten übertroffen wird. Die Auslösewahrscheinlichkeit durch den Rauschstrom je Zeitschritt dt liegt bei p_{R}= 4.5 * 10⁻⁴ entsprechend der Wahrscheinlichkeit, dass in einer Normalverteilung ein Ereignis um mehr als 3,3 Standardabweichungen nach oben ausbricht, wie in Figur 5 gezeigt. Die Auslösewahrscheinlichkeit des Signalstroms S=1,2 N ist entsprechend höher, hier genügt bereits ein Ausbrechen um 3,3-1,2=2,1 Standardabweichungen, es ist p_{S}=0,017. Quantitativ beträgt die Standardabweichung der Binomialverteilung σ_{N}=(n*p_{R}*(1-p_{R}))1/2 = 0.16 und damit liegt das Signal-Rauschverhältnis eines angenommenen, da erfindungsgemäß ja nicht aufgezeichneten Histogramms entsprechend Figur 6 bei n*(p_{S}-p_{R})/ σₙ≈6. Diese Übereinstimmung des Signal-Rauschverhältnisses bei herkömmlicher niedriger und erfindungsgemäßer hoher Schwelle war natürlich nach der Diskussion zu Figur 6 zu erwarten. Wenn man nun noch die vorteilhafte Ausführungsform heranzieht, in der insgesamt über alle Einzelmessungen Abtastwerte des niedrigen Kanals nur für fünf Umgebungen beispielsweise der Länge 2*t_{Puls} zu den fünf signifikantesten Ereignissen im hohen Kanal abgespeichert werden, so besteht ein Speicherbedarf von nur 1000 Bit = 5* 2 * t_{Puls}/dt.

Auch wenn dies nur ein Zahlenbeispiel ist, wird die Einsparung von Speicherbedarf dadurch deutlich. Der hohe Kanal selektiert die relevanten Ereignisse für den niedrigen Kanal. Aus dem hohen Kanal müssen lediglich die wenigen Zeitstempel der dort erfassten Ereignisse gespeichert werden, womit der Aufwand nicht mehr linear, sondern nur noch logarithmisch mit der Anzahl n der Einzelmessungen anwächst, und aus dem niedrigen Kanal können gezielt die gespeicherten Abtastwerte auf enge zeitliche Umgebungen dazu reduziert werden.

## Patentansprüche

1. Optoelektronischer Sensor (10) zur Erfassung und Abstandsbestimmung eines Objekts (20) in einem Überwachungsbereich (18) mit einem Lichtlaufzeitverfahren mit mehreren Einzelmessungen durch wiederholt ausgesandte und wieder empfangene Lichtpulse, wobei der Sensor (10) einen Lichtsender (12) zum wiederholten Aussenden von Lichtpulsen für jeweils eine Einzelmessung, einen Lichtempfänger (22) zum Erzeugen eines Empfangssignals aus einem von dem Objekt (20) remittierten Lichtpuls, eine erste Abtasteinheit (34) zum Abtasten des Empfangssignals mit einer niedrigen Schwelle und eine zweite Abtasteinheit (36) zum Abtasten des Empfangssignals mit einer hohen Schwelle, einen Speicher (42) zum Ablegen von Abtastwerten der ersten Abtasteinheit (34) und/oder der zweiten Abtasteinheit (36) oder daraus abgeleiteter Größen und eine Steuer- und Auswertungseinheit (38, 40) aufweist, die dafür ausgebildet ist, nach mehreren Einzelmessungen mit Hilfe der in dem Speicher (42) abgelegten Daten einen Messwert für die Lichtlaufzeit von dem Sensor (10) zu dem Objekt (20) zu bestimmen,
**dadurch gekennzeichnet,**
**dass** die Steuer- und Auswertungseinheit (38, 40) weiterhin dafür ausgebildet ist, Abtastwerte der ersten Abtasteinheit (34) oder daraus abgeleitete Größen nur dann in dem Speicher (42) abzulegen, wenn die zweite Abtasteinheit (36) für dieselbe Einzelmessung ein Überschreiten der hohen Schwelle feststellt.

2. Sensor (10) nach Anspruch 1,
wobei die niedrige Schwelle so gewählt ist, dass das Empfangssignal zu 10% - 80% der Zeit oberhalb liegt und/oder die hohe Schwelle so gewählt ist, dass das Empfangssignal zu höchstens 1% der Zeit oberhalb liegt.

3. Sensor (10) nach Anspruch 1 oder 2,
wobei die Steuer- und Auswertungseinheit (38, 40) dafür ausgebildet ist, die hohe Schwelle dynamisch anzupassen, insbesondere innerhalb einer Einzelmessung in Abhängigkeit von der Entfernung, die der ausgesandte Lichtpuls bereits zurückgelegt hat, von einem Abstand des Objekts (20) und/oder von einer Remission des Objekts (20).

4. Sensor (10) nach einem der vorhergehenden Ansprüche,
wobei die Steuer- und Auswertungseinheit (38, 40) dafür ausgebildet ist, einen Zeitpunkt zu speichern, zu dem die zweite Abtasteinheit (36) einen Schwellenübergang des Empfangssignals bezüglich der hohen Schwelle feststellt.

5. Sensor (10) nach einem der vorhergehenden Ansprüche,
wobei die Steuer- und Auswertungseinheit (38, 40) dafür ausgebildet ist, Abtastwerte der ersten Abtasteinheit (34) oder daraus abgeleitete Größen nur in einer zeitlichen Umgebung eines von der zweiten Abtasteinheit (36) festgestellten Schwellenübergangs zu speichern, wobei die Dauer der zeitlichen Umgebung ein bis fünf Pulsbreiten des ausgesandten Lichtpulses beträgt.

6. Sensor (10) nach einem der vorhergehenden Ansprüche,
wobei die Steuer- und Auswertungseinheit (38, 40) dafür ausgebildet ist, Abtastwerte der ersten Abtasteinheit (34) oder daraus abgeleitete Größen nur für eine vorgegebene Anzahl von Einzelmessungen zu speichern, insbesondere für diejenigen Einzelmessungen mit den meisten Überschreitungen der hohen Schwelle in der zweiten Abtasteinheit (36).

7. Sensor (10) nach einem der Ansprüche 1 bis 4,
wobei die Steuer- und Auswertungseinheit (38, 40) dafür ausgebildet ist, anstelle von Abtastwerten nur summarische Kennwerte abzuspeichern, insbesondere einen Mittelwert von Abtastwerten.

8. Sensor (10) nach einem der vorhergehenden Ansprüche,
wobei zwischen Lichtempfänger (22) und zweiter Abtasteinheit (36) ein analoges, auf eine Pulslänge der Lichtpulse abgestimmtes Filter (60) angeordnet ist.

9. Sensor (10) nach einem der vorhergehenden Ansprüche,
wobei die Steuer- und Auswertungseinheit (38, 40) dafür ausgebildet ist, aus Abtastwerten der ersten Abtasteinheit (34) oder daraus abgeleiteten Größen eine Intensität des remittierten Lichtpulses zu bestimmen.

10. Sensor (10) nach einem der vorhergehenden Ansprüche,
wobei der Lichtempfänger (22) eine Vielzahl von SPAD-Lichtempfangselementen aufweist, die ein gemeinsames Empfangssignal erzeugen.

11. Sensor (10) nach einem der vorhergehenden Ansprüche,
wobei die Steuer- und Auswertungseinheit (38, 40) dafür ausgebildet ist, nach Überschreiten der hohen Schwelle in der zweiten Abtasteinheit (36) für ein Zeitintervall weitere Überschreitungen der hohen Schwelle zu ignorieren.

12. Verfahren zur Erfassung und Abstandsbestimmung eines Objekts (20) in einem Überwachungsbereich (18) mit einem Lichtlaufzeitverfahren mit mehreren Einzelmessungen durch wiederholt ausgesandte und wieder empfangene Lichtpulse, bei dem wiederholt Lichtpulse für jeweils eine Einzelmessung ausgesandt werden, aus einem von dem Objekt (20) remittierten Lichtpuls ein Empfangssignal erzeugt und das Empfangssignal in einer ersten Abtastung (34) mit einer niedrigen Schwelle und in einer zweiten Abtastung (36) mit einer hohen Schwelle abgetastet wird, Abtastwerte der ersten und/oder zweiten Abtastung (34, 36) oder daraus abgeleitete Größen gespeichert werden und nach mehreren Einzelmessungen mit Hilfe gespeicherten Daten ein Messwert für die Lichtlaufzeit zu dem Objekt (20) bestimmt wird,
**dadurch gekennzeichnet,**
**dass** Abtastwerte der ersten Abtastung (34) oder daraus abgeleitete Größen nur dann gespeichert werden, wenn mit der zweite Abtastung (36) für dieselbe Einzelmessung ein Überschreiten der hohen Schwelle feststellt wird.

## Claims

1. An optoelectronic sensor (10) for detecting and determining the distance of an object (20) in a monitoring area (18) using a light time-of-flight method with a plurality of individual measurements by repeatedly transmitting and receiving light pulses, wherein the sensor (10) comprises a light transmitter (12) for repeatedly transmitting light pulses for a respective individual measurement, a light receiver (22) for generating a reception signal from a light pulse remitted by the object (20), a first sampling unit (34) for sampling the reception signal with a low threshold and a second sampling unit (36) for sampling the reception signal with a high threshold, a memory (42) for storing sampling values of the first sampling unit (34) and/or the second sampling unit (36) or variables derived therefrom, and a control and evaluation unit (38, 40) configured to determine a measured value for the light time of flight from the sensor (10) to the object (20) after a plurality of individual measurements based on the data stored in the memory (42),
**characterized in that** the control and evaluation unit (38, 40) is further configured to store sampling values of the first sampling unit (34) or variables derived therefrom in the memory (42) only if the second sampling unit (36) detects an exceeding of the high threshold for the same individual measurement.

2. The sensor (10) according to claim 1,
wherein the low threshold is selected so that the received signal is above the low threshold 10%-80% of the time and/or the high threshold is selected so that the received signal is above the high threshold at most 1% of the time.

3. The sensor (10) according to claim 1 or 2,
wherein the control and evaluation unit (38, 40) is configured to dynamically adapt the high threshold, in particular within an individual measurement in dependence on the distance that the transmitted light pulse has already travelled, on a distance of the object (20) and/or on a reflectivity of the object (20).

4. The sensor (10) according to any one of the preceding claims,
wherein the control and evaluation unit (38, 40) is configured to store a time at which the second sampling unit (36) detects a threshold transition of the received signal with respect to the high threshold.

5. The sensor (10) according to any one of the preceding claims,
wherein the control and evaluation unit (38, 40) is configured to store sampling values of the first sampling unit (34) or variables derived therefrom only in a time neighborhood of a threshold transition detected by the second sampling unit (36), the duration of the time neighborhood being one to five pulse widths of the transmitted light pulse.

6. The sensor (10) according to any one of the preceding claims,
wherein the control and evaluation unit (38, 40) is configured to store sampling values of the first sampling unit (34) or variables derived therefrom only for a predetermined number of individual measurements, in particular for those individual measurements with the largest number of times the high threshold is exceeded in the second sampling unit (36).

7. The sensor (10) according to any one of claims 1 to 4,
wherein the control and evaluation unit (38, 40) is configured to store only summary characteristic values instead of sampling values, in particular an average value of sampling values.

8. The sensor (10) according to any one of the preceding claims,
wherein an analog filter (60) matched to a pulse length of the light pulses is arranged between the light receiver (22) and the second scanning unit (36).

9. The sensor (10) according to any one of the preceding claims,
wherein the control and evaluation unit (38, 40) is configured to determine an intensity of the remitted light pulse from sampling values of the first sampling unit (34) or variables derived therefrom.

10. The sensor (10) according any one of the preceding claims,
wherein the light receiver (22) comprises a plurality of SPAD light receiving elements which generate a common received signal.

11. The sensor (10) according to any one of the preceding claims,
wherein the control and evaluation unit (38, 40) is configured to ignore that the high threshold again is exceeded in the second sampling unit (36) for a time interval after the high threshold has been exceeded.

12. A method for detecting and determining the distance of an object (20) in a monitoring area (18) using a light time-of-flight method with a plurality of individual measurements by repeatedly transmitting and receiving light pulses, wherein light pulses are repeatedly transmitted for a respective individual measurement, a reception signal is generated from a light pulse remitted by the object (20) and the reception signal is sampled in a first sampling (34) with a low threshold and in a second sampling (36) with a high threshold, sampling values of the first sampling and/or the second sampling (34, 36) or variables derived therefrom are stored, and after a plurality of individual measurements a measured value for the light time of flight to the object (20) is determined based on the stored data,
**characterized in that** sampling values of the first sampling (34) or variables derived therefrom are only stored if the second sampling (36) for the same individual measurement detects that the high threshold is exceeded.

## Revendications

1. Capteur optoélectronique (10) pour la détection et la détermination de la distance d'un objet (20) dans une zone à surveiller (18) par un procédé de temps de parcours de lumière avec plusieurs mesures individuelles par des impulsions lumineuses émises et reçues à répétition, dans lequel le capteur (10) comprend un émetteur de lumière (12) pour l'émission répétée d'impulsions lumineuses pour une mesure individuelle respective, un récepteur de lumière (22) pour générer un signal de réception à partir d'une impulsion lumineuse réémise par l'objet (20), une première unité d'échantillonnage (34) pour échantillonner le signal de réception avec un seuil bas et une seconde unité d'échantillonnage (36) pour échantillonner le signal de réception avec un seuil haut, une mémoire (42) pour stocker des valeurs d'échantillonnage de la première unité d'échantillonnage (34) et/ou de la seconde unité d'échantillonnage (36) ou des grandeurs qui en sont dérivées, et une unité de commande et d'évaluation (38, 40) qui est conçue pour déterminer une valeur de mesure pour le temps de parcours de lumière du capteur (10) à l'objet (20) après plusieurs mesures individuelles à l'aide des données stockées dans la mémoire (42),
**caractérisé en ce que**
l'unité de commande et d'évaluation (38, 40) est en outre conçue pour stocker dans la mémoire (42) des valeurs d'échantillonnage de la première unité d'échantillonnage (34) ou des grandeurs qui en sont dérivées uniquement si la seconde unité d'échantillonnage (36) constate un dépassement du seuil haut pour la même mesure individuelle.

2. Capteur (10) selon la revendication 1,
dans lequel le seuil bas est choisi de manière à ce que le signal de réception soit supérieur audit seuil pendant 10 % à 80 % du temps, et/ou le seuil haut est choisi de manière à ce que le signal de réception soit supérieur audit seuil au maximum pendant 1 % du temps.

3. Capteur (10) selon la revendication 1 ou 2,
dans lequel l'unité de commande et d'évaluation (38, 40) est conçue pour adapter dynamiquement le seuil haut, en particulier au sein d'une mesure individuelle, en fonction du trajet déjà parcouru par l'impulsion lumineuse émise, d'une distance de l'objet (20) et/ou d'une réémission par l'objet (20).

4. Capteur (10) selon l'une des revendications précédentes,
dans lequel l'unité de commande et d'évaluation (38, 40) est conçue pour mémoriser un instant auquel la seconde unité d'échantillonnage (36) constante une transition de seuil du signal de réception par rapport au seuil haut.

5. Capteur (10) selon l'une des revendications précédentes,
dans lequel l'unité de commande et d'évaluation (38, 40) est conçue pour mémoriser des valeurs d'échantillonnage de la première unité d'échantillonnage (34) ou des grandeurs qui en sont dérivées uniquement dans un environnement temporel d'une transition de seuil détectée par la seconde unité d'échantillonnage (36), la durée de l'environnement temporel étant de une à cinq largeurs d'impulsion de l'impulsion lumineuse émise.

6. Capteur (10) selon l'une des revendications précédentes,
dans lequel l'unité de commande et d'évaluation (38, 40) est conçue pour mémoriser les valeurs d'échantillonnage de la première unité d'échantillonnage (34) ou les grandeurs qui en sont dérivées uniquement pour un nombre prédéterminé de mesures individuelles, en particulier pour celles des mesures individuelles qui présentent le plus grand nombre de dépassements du seuil haut dans la seconde unité d'échantillonnage (36).

7. Capteur (10) selon l'une des revendications 1 à 4,
dans lequel l'unité de commande et d'évaluation (38, 40) est conçue pour mémoriser uniquement des valeurs caractéristiques sommaires au lieu de valeurs d'échantillonnage, en particulier une valeur moyenne des valeurs d'échantillonnage.

8. Capteur (10) selon l'une des revendications précédentes,
dans lequel un filtre analogique (60) adapté à une longueur d'impulsion des impulsions lumineuses est disposé entre le récepteur de lumière (22) et la seconde unité d'échantillonnage (36).

9. Capteur (10) selon l'une des revendications précédentes,
dans lequel l'unité de commande et d'évaluation (38, 40) est conçue pour déterminer une intensité de l'impulsion lumineuse réémise à partir des valeurs d'échantillonnage de la première unité d'échantillonnage (34) ou des grandeurs qui en sont dérivées.

10. Capteur (10) selon l'une des revendications précédentes,
dans lequel le récepteur de lumière (22) comprend une multitude d'éléments récepteurs de lumière SPAD qui génèrent un signal de réception commun.

11. Capteur (10) selon l'une des revendications précédentes,
dans lequel l'unité de commande et d'évaluation (38, 40) est conçue pour ignorer d'autres dépassements du seuil haut pendant un intervalle de temps après que le seuil haut a été dépassé dans la seconde unité d'échantillonnage (36).

12. Procédé de détection et détermination de la distance d'un objet (20) dans une zone à surveiller (18) par un procédé de temps de parcours de lumière avec plusieurs mesures individuelles par des impulsions lumineuses émises et reçues à répétition, dans lequel des impulsions lumineuses sont émises à répétition pour une mesure individuelle respective, un signal de réception est généré à partir d'une impulsion lumineuse réémise par l'objet (20), et le signal de réception est échantillonné avec un seuil bas dans un premier échantillonnage (34) et avec un seuil haut dans un second échantillonnage (36), des valeurs d'échantillonnage du premier et/ou du second échantillonnage (34, 36) ou des grandeurs qui en sont dérivées sont mémorisées, et une valeur de mesure pour le temps de parcours de lumière vers l'objet (20) est déterminée après plusieurs mesures individuelles à l'aide des données mémorisées,
**caractérisé en ce que**
les valeurs d'échantillonnage du premier échantillonnage (34) ou des grandeurs qui en sont dérivées ne sont mémorisées que si un dépassement du seuil haut est constaté par le second échantillonnage (36) pour la même mesure individuelle.
